# EUROPEAN PATENT APPLICATION

(11) **EP 1 227 413 A1**
(43) Date of publication of application: **31.07.2002**
(21) Application number: 01610008.3
(22) Date of filing: 25.01.2001
(51) Int. Cl.: G06F 17/30

(54) **Method for optimised locating of indexed records of static data with different length**

(71) Applicant: Telefonaktiebolaget L M Ericsson (Publ), 126 25 Stockholm (SE)
(72) Inventor: Edpalm, Christian, 240 36 Stehag (SE)
(74) Representative: Boesen, Johnny Peder

(57) **Abstract**

This invention relates to a method of locating indexed information, comprising a plurality of static data records of different lengths, using a given key, the method comprising the step of:
- using the given key to obtain an entry number,
- selecting a base index stored in a first table on the basis of the entry number thereby obtaining a base offset, and
- adding sizes of all keys equal to or larger than the base index and lower than the given key to the base offset resulting in a final offset.
In this way an optimised index for locating records is obtained. The index reduces the memory needed for a searchable index.
This invention also relates to a corresponding structure, apparatus, computer system, and computer readable medium for locating indexed information comprising a plurality of static data records.

## Description

The present invention relates to a method of locating indexed information, comprising a plurality of static data records of different lengths, using a given key, the method comprising the step of:
- using the given key to obtain an entry number.

The present invention also relates to a data structure for locating indexed information, comprising a plurality of static data records of different lengths, using a given key.

The present invention also relates to an apparatus for locating indexed information comprising a plurality of static data records of different lengths, where the apparatus comprises the data structure and/or uses the method according to the present invention.

Additionally, the invention relates to a computer system for performing the method according to the invention and a computer readable-medium comprising a program, which may cause a computer (system) to perform the method of the present invention.

Index tables are often used to locate information stored as records. The index tables comprises a number of keys, typically one for each record, so a given record may be retrieved by matching a corresponding key against the keys stored in the index. When the given key matches a key in the index a corresponding offset, pointer or the like is used to locate the relevant record.

Some indexing algorithms exist that allows for modifications, e.g. used in databases, of the records, which requires an index structure that can be easily updated usually adding to the complexity and degrading the efficiency of the index structure with respect to memory usage (of the index), retrieval time, computational need, etc.

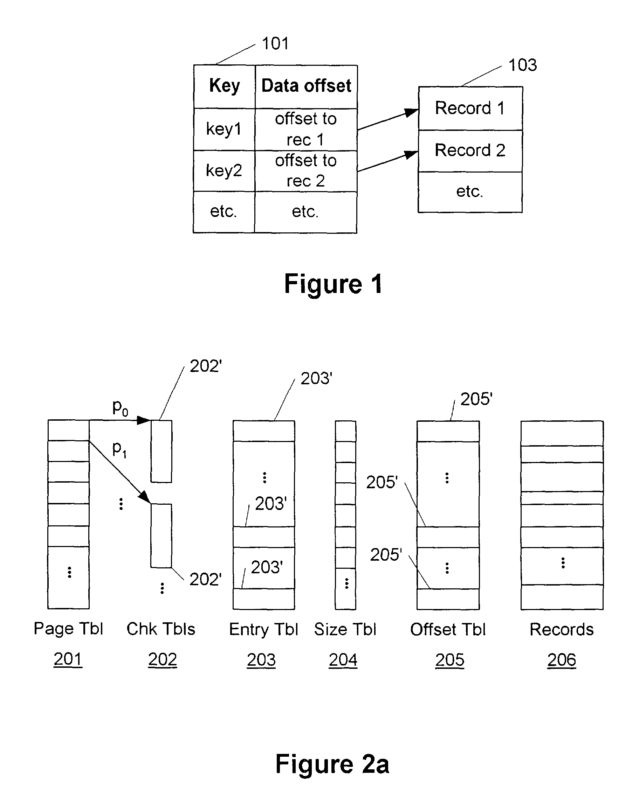

Prior art is discussed in connection with Figure 1.

An object of the invention is to provide an optimised method of locating indexed static data with a very low memory usage/consumption and reduced execution time.

This object is achieved by a method of the aforementioned kind where the method further comprises the steps of:
- selecting a base index stored in a first table on the basis of the entry number thereby obtaining a base offset, and
- adding sizes of all keys, equal to or larger than the base index and lower than the given key, to the base offset resulting in a final offset.

Hereby, a very efficient method of indexing data with respect to memory consumption/usage is provided, since only the minimum amount of memory needs to be stored.

More specifically, by storing the sizes of each record with an associated key only offsets for every other key (i.e. the base offset), e.g. for every 16^{th} key used/record, needs to be stored, since the offsets for the other used keys/records may be calculated using the sizes of the records associated with the used keys. This reduces the amount of memory needed.

The number of offsets not being stored, e.g. 15 for every 16^{th} stored offset, may vary dependent of the type of information being stored and/or whether speed or lower memory usage are preferred. For some applications it might e.g. be more useful to store every 8^{th} offset and so on.

According to one embodiment, the key comprises a given first key part and a given second key part and the step of using the given key to obtain an entry number comprises:
- using the given key to address a given entry in second table, comprising a number of segments each comprising a number of entries, in order to obtain a given indication to a specific segment,
- obtaining an intermediate entry number from a third table by using the given first key part,
- updating the intermediate entry number by adding the number of keys, stored in the specific segment of the second table, lower than the given key resulting in the entry number.

In this way, the entry number may be obtained in a very simple manner.

According to a preferred embodiment, the key comprises a given first key part and a given second key part, and the step of using the given key to obtain an entry number comprises:
- using the given first key part to address a fourth table, comprising a number of entries each comprising an indication of a fifth table among a plurality of fifth tables, in order to obtain a given indication to a specific fifth table,
- obtaining an intermediate entry number from a third table by using the given first key part,
- updating the intermediate entry number by adding the number of second key parts, stored in the specific fifth table, lower than the given second key part resulting in the entry number.

Hereby, the indication may be used to check whether a record exists for a given first key part. This may be achieved by letting the indication indicate it. For example, the indication may e.g. be a pointer pointing to a given fifth table and in the case of no records existing with the corresponding first key part the pointer may be a NIL pointer.

Additionally, only fifth tables being used needs to be stored, which saves additional memory. Further, computational time is saved since it is faster to search two tables each with *X* entries than searching a single table with X^2 entries (e.g. like the second page).

In this way, only relevant information (in the other tables) needs to be stored for keys actually having an associated record thus potentially reducing the needed amount of memory.

According to a preferred embodiment, the final offset is used to retrieve a record associated with the given key.

Hereby, easy retrieval of the information being requested is obtained.

In accordance with a preferred embodiment of the method, the specific fifth table or second table further is used in order to verify/check whether a given record exists for a given second key part or for a given key.

In this way, the only information regarding existing records associated with a given first and given a second key part needs to be stored in the respective tables.

Additionally, it is preferred that a single bit in each entry of the plurality of fifth tables or in each entry of the second table is stored and signifies whether a record exists for a given second key part or for a given key.

Hereby a very simple check is obtained.

In accordance with another embodiment, a sixth table comprises the size of all keys each associated with an existing record.

Hereby, are the sizes of the records being used to calculate the final offset easily obtainable and only the sizes of existing records needs to be stored.

In a preferred embodiment, if any size of a record is larger than what may be indicated by an entry in the sixth table then the value for that entry in the sixth table is given a zero value and the record being too large will have a two byte header stored in the actual record data specifying the size of the record.

Hereby, records being larger than what may be described by the values in the sixth table may be stored. This may be very advantageous especially considering the following: If 95% of all the records uses less than 32 bytes and the rest above 32 bytes then the entries in the sixth table only needs 5 bits if the rest is stored as described above using only 5 bits for every records. Otherwise every entry in the sixth table must contain enough bits to describe the largest records, which uses a lot of additional memory especially if only a small part is larger than a given threshold.

In another preferred embodiment, the data records each comprise a representation of a font character.

In one embodiment, the given key is a Unicode for a font character being indexed according to the given key.

In this way, the stored font characters may be indexed efficiently after their Unicode. The first key part and the second key part may e.g. be the upper 8 bits and lower 8 bits of the 16-bit Unicode, respectively.

Unicode is a registered trademark of the Unicode Consortium.

Another object of the invention is to provide a structure that provides an index for static data with a very low memory usage/consumption and execution time.

This object is achieved by a structure of the aforementioned kind, where the data structure is adapted to obtain an entry number using the given key, and wherein the data structure comprises
- a first table comprising a plurality of base indexes being accessible on the basis of the entry number thereby obtaining a base offset,
and in that the data structure further enables
- adding sizes of all keys equal or larger than the base index and lower than the given key resulting in a final offset.

According to one embodiment, the key comprises a given first key part and a given second key part, and the data structure further comprises:
- a second table, comprising a number of segments each comprising a number of entries each comprising an indication of a specific segment among a plurality of segments and each being accessible by the key in order to, obtain an given indication to a specific segment,
- a third table comprising a number of intermediate entry numbers being accessible by using the given first key part,
and in that the data structure further enables
- updating of the intermediate entry number by adding the number of keys, stored in the specific segment, lower than the given key, resulting in the entry number.

According to a preferred embodiment, the key comprises a given first key part and a given second key part and the data structure further comprises:
- a fourth table comprising a number of entries each comprising an indication of a fifth table among a plurality of fifth tables and each being accessible by the given first key part in order to, obtain an given indication to a specific fifth table,
- a plurality of fifth tables, and
- a third table comprising a number of intermediate entry numbers being accessible by using the given first key part,
and where the data structure further enables
- updating of the intermediate entry number by adding the number of second key parts, stored in the specific fifth table, lower than the given second key part, resulting in the entry number.

According to a preferred embodiment, the final offset is used to retrieve a record associated with the given key.

According to another embodiment, the specific fifth table or the second table further is used in order to verify/check whether a given record exists for a given second key part or for a given key.

According to yet another embodiment, a single bit in each entry of the plurality of fifth tables or in each entry of the second table is stored and signifies whether a record exists for a given second key part or for a given key.

In one embodiment, a sixth table comprises the size of all keys each associated with an existing record.

In one embodiment, if any size of a record is larger than what may be indicated by an entry in the sixth table then the value for that entry in the sixth table is given a zero value and the record being too large will have a two byte header stored in the actual record data specifying the size of the record.

In one embodiment, the data records each comprise a representation of a font character.

In one embodiment, the given key is a Unicode for a font character being indexed according to the given key.
The data structure and embodiments thereof correspond to the method and embodiments thereof and has the same advantages for the same reasons why they are not described again.

Further the invention relates to an apparatus for locating indexed information comprising a plurality of static data records of different lengths, where the apparatus comprises a data structure and/or a method according to the invention.

In one embodiment, the apparatus is a portable device.

In a preferred embodiment, the apparatus is a mobile telephone.

The apparatus and embodiments thereof correspond to the method and/or structure and embodiments thereof and have the same advantages for the same reasons why they are not described again.

Further, the invention relates to a computer-readable medium having stored thereon instructions for causing a processing unit or a computer system to execute the method described above and in the following. A computer-readable medium may e.g. be a CD-ROM, a CD-R, a DVD RAM/ROM, a floppy disk, a hard disk, a smart card, a network accessible via a network connection, a ROM, RAM, and/or Flash memory, etc. or generally any other kind of media that provides a computer system with information regarding how instructions/commands should be executed.

Hereby, when a computer is caused to retrieve electronic information - as a consequence of the contents of a computer-readable medium as described above - the advantages mentioned in connection with the corresponding method according to the invention are achieved.

Finally, the invention relates to a computer system comprising means adapted to execute a program, where the program, when executed, causes the computer system to perform the method according to the invention thereby obtaining the above mentioned advantages and/or effects.

By computer system is meant e.g. a system comprising one or more processor means, like a specialised or general purpose CPU or the like, which may be programmed/instructed at one time or another in such a way that the computer executes the method according to the invention fully or in part.

In the following:
A first table is designated a 'Offset Table',
a second table 'Key Table'
a third table 'Entry Table',
a fifth table 'Check Table',
a fourth table 'Page Table', and
a sixth table 'Size Table'.

Additionally, one or more tables may be stored in one form or another in one single data structure/table.

The present invention will now be described more fully with reference to the drawings, in which
Figure 1 illustrates a prior art index structure;
Figure 2a illustrates a schematic functional block diagram of an index structure according to a preferred embodiment of the present invention;
Figure 2b illustrates a schematic functional block diagram of an index structure according to an alternative embodiment of the present invention;
Figure 3 illustrates a more detailed schematic functional block diagram of an index structure according to a preferred embodiment of the present invention;
Figure 4 shows a single character of the Asian font file/resource.
Figure 5a shows a flowchart illustrating a preferred embodiment of the method according to the present invention;
Figure 5b shows a flowchart of an alternative embodiment of the method according to the present invention;
Figure 6 shows a preferred embodiment of the invention, which may contain the memory structure and/or use the method according to the present invention;

Figure 1 illustrates a common prior art index structure. Shown is a sequence/series of records (103) stored in a memory. In order to search for (and retrieve) a specific record an index is often needed. The index comprises a key (101) for each record (103). In this way, a search for a particular record may be performed by searching for the particular key corresponding to the record to be retrieved.

The space/memory needed for this kind of index structure with *n* records is *n* × the size of the key and offset. For 16-bit integer keys and 32-bit integer offsets the space needed would be *n* × 6 bytes.

For an exemplary Asian Unicode font file, which at the present time contains approx. 11000 characters, i.e. records, the required size of the index data structure is 66 Kbytes. The number of characters may be changed thereby changing the required size.

The structure may e.g. be searched by using a binary search algorithm as generally known in the prior art. The number of operations performed on average is a function of the number of entries in the table.

If the record size is constant the prior art example may by simplified to storing only the keys, so when the correct key has been determined, the size of the records may be multiplied with the entry number resulting in the offset of the record in the record area. This will reduce the table size to *n* × 2 bytes, which for the exemplary Asian Unicode font file will give a required size of the index data structure to 22 Kbytes.

It is possible to remove even the keys and instead use a table with only one bit per character, signifying whether the key exists or not. This table may e.g. be called an index table. Additionally, an offset table for each e.g. 256^{th} key, which may be searched like this:

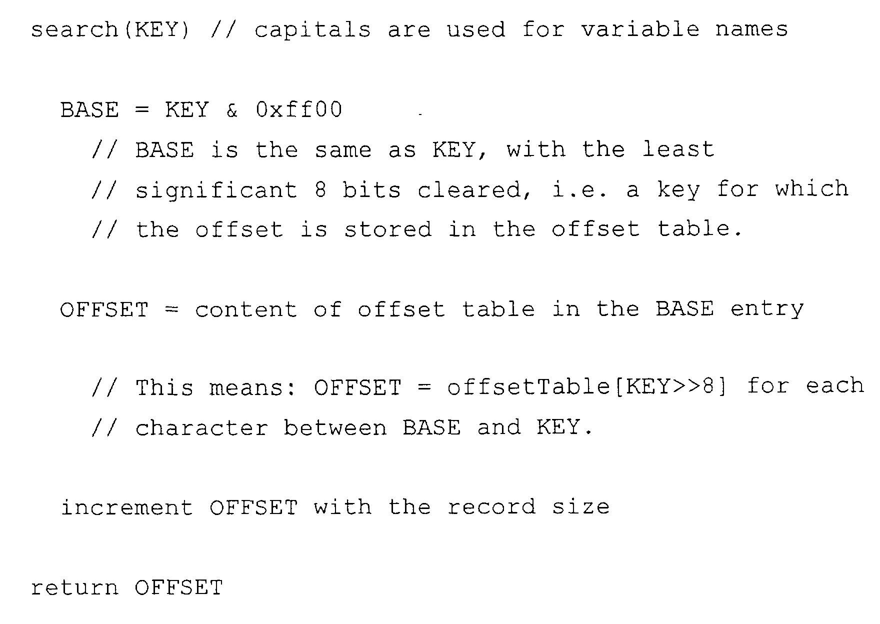

If the index table is stored as bytes, each byte will contain the 'exists' flag for eight keys. The incrementation of the offset above, may be performed more easily by simply adding the number of "1"s in the bytes between BASE and KEY (except the "1"s in the byte corresponding to KEY, where only the "1" s corresponding to keys less than KEY should be added) . A utility array may be kept in order to speed up the counting of bits, 'BitsInByte[]', with 256 entries for the 256 possible bit patterns in a byte. Each entry contains the number of "1"s in the same entry's index value.

For 16 bit keys, the index table will be 8 Kbytes and the offset table 4×65536/256=4×256 = 1024 bytes giving a total of 9 Kbytes (not counting the 256 byte utility array).

In the previous version flags for all 65536 possible key were store even though it is likely not all of the keys are actually used (In the exemplary Asian Unicode font file only 11000 are used). The above structure may therefore be even more efficient by storing flags only for those portions where keys exist. This may be achieved by dividing the index into a page table with 256 entries, where each entry points to a page-index-table. Each page-index-table has 32 bytes for the 256 character flags it contains.

In the exemplary Asian Unicode font file, only 104 of the 256 pages has any used key-entries, which gives a page table of 256×4 = 1024 bytes, and 104 page-index-tables each of 32 bytes. The 256 entries needed in the offset table uses 1024 bytes. In total 1024 + 3328 (104×32) + 1024 = 5376 bytes are used.

However, an Asian Unicode font file and many other types of information/records do not have a constant record length so that particular simplification may not be applied for such information thereby using a lot of memory for storing a useable index.

Figure 2a illustrates a schematic functional block diagram of an index structure according to a preferred embodiment of the present invention. The structure indexes a number of records, which may have different lengths, and is very efficient with respect to memory usage/consumption. The records are indexed according to a first and a second key or a first and second part of a single key (referred to as first or second key in the following).

The fields of the shown tables are in this particular example enumerated from 0 starting from the top and down.

Shown is a Page Table (201) comprising a number of fields/entries each comprising a first code/key after which corresponding records (206) are indexed at least partially.

A number of Check Tables (202) are also shown. Preferably, a Check Table (202') exists only for each field/entry in the Page Table (201) comprising a valid/used first key, i.e. a first key being associated with a stored record (206). The entries of the Check Tables (202) signify whether a record exists/is stored or not.

An Entry Table (203), comprising a number of entries (203') each comprising an intermediate entry number, is also shown and will be explained in greater detail in the following.

A Size Table (204) is also shown. Preferably, the entries of the Size Table (204) contain information regarding the size of each indexed record (206), i.e. the number of entries are equal to the number of used first and second key combinations.

Also shown is another table designated Offset Table (205) comprising offset entries/values (205'. The offset values (205') each specify an offset for a record. Preferably, only one offset/entry (205'), called a Base offset (205'), is stored for each group of, e.g. 16, entries instead of storing an offset for every stored record. That is only one Base offset (205') is stored for every *i'th* record/first and second key combination, e.g. one Base offset (205') is stored for every 16^{th} stored record. In this way, memory is saved since only an i'th amount of space is needed.

The offsets for the other records (206) are derived using the Size Table (204) as will be explained in the following.

Not every field is shown in the respective tables but only those needed in order to explain the function and features of the arrangement of the tables.

The relationship and functions of the tables will be described in the following.

As mentioned, the Page Table (201) comprises a number of keys after which information is indexed at least partly. By partly is meant that a first key or a first part of a key is matched against the indexes in the Page Table (201).

Each field of the Page Table (201) also comprises a pointer (pₓ) (where *x* designates the number/location for a particular field/entry in the Page Table (201)) to a respective Check Table (202') associated with the field/key in the Page Table (201).

In one embodiment, there exists a single Check Table (202') for each entry/field, comprising a key/index number, in the Page Table (201).

In a preferred embodiment, only Check Tables (202, 202') for relevant entries in the Page Table (201) are stored. So if e.g. no records are indexed according to a first key e.g. [6C] then even though that first key may exist in the Page Table (201) no corresponding Check Table are stored, which reduces the amount of needed space even further. The entry for first key e.g. [6C] in the Page Table (201) may indicate that no Check Table for that particular key exists by containing a NIL pointer. In this way, retrieval for a non-existing record may be aborted very fast thereby saving execution time and memory by not necessarily storing a Check Table for each possible key.

For a 16-bit key consisting of a 8-bit first and a 8-bit second key part, only one Page Table (201) with 256 entries and a maximum of 256 Check Tables (202') are needed instead of a single table comprising 2^16 = 65536 entries. This arrangement, apart from saving memory especially if several Check Tables does not have to be stored, also save computational time since it is faster to search two tables each with 256 entries than searching a single table with 65536 entries.

An additional function of the Check Tables (202) is to signify whether a record (206) exists or not for a given first key (checked by checking whether a NIL pointer is stored in the Page Table (201)) and second key or a first and second part of a single key. This may e.g. be done quite simply by storing a "1" or a "0" in an appropriate entry of the Check Tables (202) if the given record exists or not, respectively. In this way, only a single bit is needed in order to signify whether the given record exists or not, i.e. is retrievable.

So firstly, a first key or a first part of a key (referred to as first key in the following) is used as an index in the Page Table (201) in order to find the relevant Check Table (202') by using the relevant pointer (pₓ) stored in the Page Table (201) at an field number equal to the first key. Secondly, another key or a second part of a key (referred to as second key in the following) is used as an index in the relevant Check Table (202') in order to locate the appropriate entry in the Check Table (202') specifying whether a given record exists or not.

As an example, given a first 8-bit [8B] and a second 8-bit key [FE] (in hexadecimal notation), indexing a given record in the Records Table (206), Page Table[8B] (8B in hexadecimal equals 139 in decimal notation) locates the relevant pointer (p₁₃₉) pointing to the relevant Check Table (Check Table number 139). If no record exists for the given first key [8B] the pointer will be a NIL pointer. After locating the relevant Check Table via the pointer, that particular Check Table is addressed at an field/index equal to the second key [FE] (equal to 254 in decimal notation), i.e. Check Table[FE], to see whether the contents of the index specifies that the given record exists or not for the first and second key. Preferably, simply by checking if the given index contains a "0" or "1".

After the check of whether the record exists or not, the Entry Table (203) are first addressed by using the first key in order to determine the intermediate entry number for the specific Check Table (202'). Then the number of "1" s in the specific Check Table (202') being located above the index for the second key is counted, i.e. counting the number (*N*_{*1*}) of existing/checked lower (incrementing from the first entry) second keys. The amount (*N*_{*1*}) is then added to the intermediate entry number for the specific Check Table (202') in order to give the entry number for the relevant record.

Only entry numbers exists in the Entry Table (203) for which a first and second key exists, i.e. a first key in the Page Table (201) not associated with a NIL pointer and a second key in the specific Check Table (202') not containing a "0".

Alternatively, instead of counting the number of entries being above the entry/index defined by the second key in the relevant Check Table (202') counting down may be used. If counting down is used then it is necessary to get the intermediate entry number for the next index in the Entry Table (203) and subtract the (downwards) counted number from the index number for the entry in the Entry Table (203). Alternatively, either counting up or down in the relevant Check Table (202') may be used dependent on what is closest.

Some modifications may be in order to ensure that the above alternatives function for every (special) case.

In this way, the first key locates the relevant Check Table (202') via a pointer pₓ in the Page Table (201) and locates the relevant intermediate entry number (203') for that particular Check Table (202'). The second key is used to check if there exists a "1" for the second key in the relevant Check Table (202'), thereby signifying that a record exists, and locates the relevant entry for that particular second key in the relevant Check Table (202'). The resulting entry number, i.e. the entry number for the first and second key, is determined by adding the number of "1" s being above the relevant entry in the relevant Check Table (202') to the intermediate entry number (determined by addressing 'Entry Table[Key1]') for the relevant Check Table (202').

After the resulting/final entry number has been determined it is multiplied by the size of an entry in the Size Table (204) in order to determine the bit position for the final entry number in the Size Table (204).

Then the closest lower or equal Base Offset (205') in the Offset Table (205) has to be determined. This is preferably done by dividing the resulting/final entry number for the combination of the first and second key by a number equal to the number of offsets not in the Offset Table + 1, i.e. dividing by e.g. 16 if only one Base offset (205') is stored for every e.g. 16^{th} stored record.

After a Base Offset value is determined by addressing the Offset Table (205) at the determined closest lower or equal Base Offset (205') then the accumulated sizes of all keys that are lower than the first and second key and belonging to the same Base Offset, i.e. from the Base (205') and up to and not including the first and second key, are added to the offset value stored at the Base (205') in the Offset Table (205) giving the total offset for the first and second key. This total offset may now be used to locate the appropriate record/data information being indexed after the first and second key.

The relevant sizes of the records are preferably determined by addressing the Size Table (204), which contains the size of every stored record (206).

Preferably, if any size of a record is larger than what may be indicated by an entry in the Size Table (204), e.g. a record equal to or larger than 32 bytes if the entries in the Size Table (204) are 5 bits, the value for that entry in the Size Table (204) is given a zero value and the record being too large will have a two byte header stored in the actual record data for specifying its size.

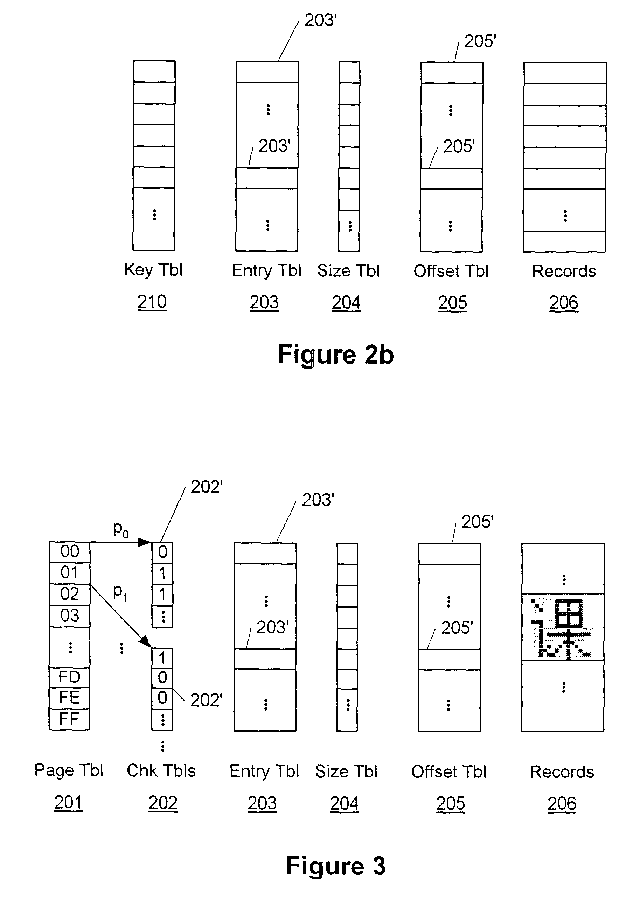

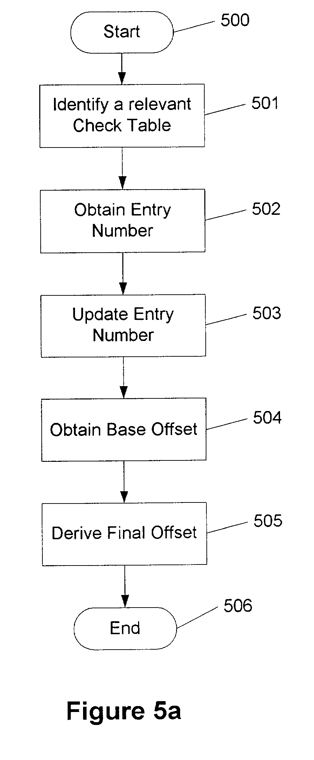

Figure 2b illustrates a schematic functional block diagram of an index structure according to an alternative embodiment of the present invention. Shown is a structure that corresponds to the structure shown in Figure 2a with the exception that the Page Table (201) and Check Tables (202) in Figure 2a is replaced by another Table designated the Key Table (210).

The Key Table (210) comprises entries/fields addressable by a key, i.e. a key comprising the first and second key part like described in connection with Figure 2a. The Key Table (210) is large enough to contain an element for every possible key.

The Key Table (210) corresponds to a single-Check-Table and comprises all the Check Tables (including the tables for the keys that is not used/associated with a record, which preferably is not stored in the structure shown in Figure 2a), or at least the same information, arranged contiguously.

The Key Table (210) comprises a number of segments each segment being similar to a Check Table (including the tables for the keys that is not used) of Figure 2a or comprising the same information.

Each entry of the Key Table (210) is preferably only 1 bit and comprises a value/indication of "1" or "0", where "1" indicates that a record exists for a key addressing the given entry and "0" indicates that a record does not exists for a key addressing the given entry.

To check for the existence of a record (206), the single bit in the field/index corresponding to the key is used.

After the check of whether the record exists or not, the Entry Table (203) are first addressed by using the first key part in order to determine an intermediate entry number for the specific segment of the Key Table (210).

Then the number of "1"s in the specific segment being located above the index for the key is counted, i.e. counting the number (*N*_{*1*}) of existing/checked lower (incrementing from the first entry) keys in that particular segment. The amount (*N*_{*1*}) is then added to the intermediate entry number for the specific segment in order to give the entry number for the relevant record/key.

That is, when the entry number is calculated, the Key Table/The Single-Check-Table (210) is used segment-wise, where each segment contains e.g. 256 entries for a 16-bit key, and where each segment corresponds to a Check-Table as described in connection with Figure 2a. For each segment there is a matching element in the Entry Table (203) used as the base/intermediate entry number for the segment, exactly as was described for one of the Check Tables in connection with Figure 2a.

The Key Table (210) is addressed by the entire key and the Entry Table (203) is still addressed by the first key part (e.g. the upper 8 bits of Unicode).

After the relevant entry number is obtained for a given key the record is retrieved by using the Size (204) and Offset (205) Tables like described in connection with Figure 2a.

The structure shown in Figure 2b does not minimise the space required for an index as much as the structure in Figure 2a (and 3). However, it still minimises the required space compared to prior art techniques and additionally it may be simpler to implement, which might be preferred for some applications, since no use of pointers are necessary.

Figure 3 illustrates a more detailed schematic functional block diagram of an index structure according to a preferred embodiment of the present invention. The following description will, as an example, use font data as the information/data to be indexed in order to illustrate the index structure according to the present invention. More specifically, the font data will be an Asian font file/resource, comprising approximately 11000 characters, for illustration purposes. The Asian Unicode presently requires roughly 66 Kbytes of memory for indexing according to the prior art method/structure shown in Figure 1.

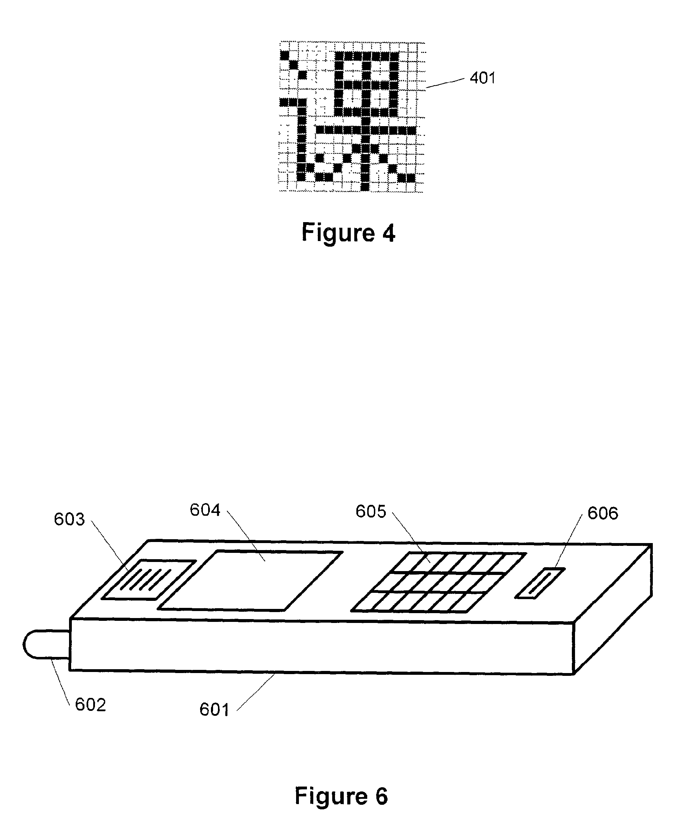

Each character of the font has a unique code according to the Unicode/ISO 10646 standard. The individual characters are indexed according to their respective Unicode in this particular exemplary embodiment. The Asian font takes up approximately 40% of the complete Unicode. As an example, the Chinese character shown in Figure 4 has the 16-bit Unicode '8BFE' in hexadecimal notation and '1000 1011 1111 1110' in binary. In the following, the key, designated KEY and being used as a key in the index structure for obtaining a record/character associated with that particular key, is equal to the Unicode for the corresponding character, i.e. KEY is equal to '8BFE' for the character shown in Figure 4. Sometimes a first key or a first part of a key is mentioned in the following and is equal to the upper 8 bits of KEY, i.e. first key or a first part of a key = '8B' and likewise for a second key or a second part of a key (= the lower 8 bits of KEY = 'FE'). Sometimes KEY is also referred to as the first and second key combination.

The structure in the Figure corresponds to the structure shown and explained in general in connection with Figure 2a.

As shown, a Page Table (201) comprises, in this particular example, a number of codes/keys after which corresponding records (206) are indexed at least partly.

Preferably, the codes/keys in the Page table (201) are at least part of the Unicode for a character with font data stored in corresponding record (206). More specifically, it is preferred in one embodiment that the upper 8 bits of the Unicode for each corresponding indexed character are stored in the Page table (201).

The Page table (201) has in this particular example 256 entries, each having the size of 3 or 4 (dependent on the type of processor architecture used, e.g. 4 for a standard PC and 3 for processors generally used in mobile telephones) bytes including the size of a pointer, for the exemplary Asian font file and contains, as mentioned the upper 8 bits of the Unicode as a first key or as a first part of a key, i.e. the entries comprise the key values from 00 to FF in hexadecimal notation (shown in the Figure going from top to bottom of the Figure).

A number of Check Tables (202) are also shown. Preferably, a Check Table (202') exists for each field/entry in the Page Table (201) comprising a first key being used to index information/records. As an example no Check Table (202') exists for the first key [01] as shown in the Figure. The entries in the Page Table (201) preferably also contain a pointer to a Check Table (202') for that particular first key thereby giving easy access to the relevant Check Table (202'). A relevant Check Table (202') may then be obtained by: CHECKTABLE = PageTable[KEY>>8] assigning the variable CHECKTABLE to a pointer pointing to the Check Table (202') associated with the first key.

For the exemplary Asian Unicode font file there exist 104 keys indexing the character data in the corresponding records giving a total of 104 Check Tables (202'). Entries in the Page Table (201) containing keys that are not being used to index information contain a NIL pointer instead of a pointer to a Check Table (202'). In this way, it may be checked whether records exist at all for the first key/upper 8 bits and only Check Tables (202) actually having an use is stored there reducing the amount of needed memory.

Each Check Table (202') comprises 256 entries of 1 bit and is accessed by using a second key or a second part of a key, i.e. using the lower 8 bits of the Unicode. Each entry in a Check Table (202') signifies whether a record exists/is stored (by having the value "1") or not (by having the value "0") for that first and second key combination. Hereby, it may be checked whether a record, character, etc. exists for a given KEY/first and second key combination if there exists records for the first key of the combination/upper 8 bits. The Check Table (202') also serves another purpose (relating to determining (*N*_{*1*})), which is explained below.

An Entry Table (203) is also shown comprising a number of entries (203') comprising intermediate entry numbers for the first key. For an index indexing the examplery Asian Unicode font file, the Entry Table (203) contains 256 entries each having the size 2 bytes.

The Entry Table (203) is used to obtain a relevant intermediate entry number for the Check table (202') of the first key, i.e. the upper 8 bits of the Unicode/KEY, and is addressed by using the first key, i.e. ENTRY = EntryTable[KEY>>8].

This stores an intermediate entry number for the relevant Check table in the variable ENTRY.

To find the relevant entry number for KEY (the first and second key combination) the number of keys being lower than KEY in the relevant Check Table (202') are counted resulting in a number (*N*_{*1*}), which is added to the obtained intermediate entry number for the relevant Check table (ENTRY) and stored in the variable ENTRY. That is ENTRY = ENTRY + (*N*_{*1*}) giving the entry number for the KEY/first and second key combination.

(*N*_{*1*}) may be determined by counting the number of "1"s in the relevant Check Table (202') located above (for descending numbered entries) the entry found by using the second key to access the relevant index in the Check Table (202') for checking whether records for a KEY/first and second key combination exists when records exists for a first key like explained above.

Alternatively, instead of counting the number of entries being above the entry defined by the second key in the relevant Check Table (202') counting down may be used. If counting down is used then it is necessary to get the intermediate entry number for the next entry/index in the Entry Table (203) and subtract the (downwards) counted number from the index for the entry in the Entry Table (203). Alternatively, either counting up or down in the relevant Check Table (202') may be used dependent on what is closest/most suitable for a given implementation and/or application of an index. This corresponds to the alternatives explained in connection with Figure 2a.

Some modifications may be in order to ensure that the above alternatives function for every (special) case.

A Size Table (204) is also shown. Preferably, the entries of the Size Table (204) contain information regarding the size of each indexed record (206), i.e. the number of entries are equal to the number of used first and second key combinations/KEY's, which is 11000 for the examplary Asian Unicode font. Each entry comprises 5 bits used to describe the size of a particular record.

Preferably, if any size of a record is larger than what may be indicated by an entry in the Size Table (204), i.e. equal to or larger than or equal to 32 bytes for 5 bits Size Table (204) entries, the value for that entry in the Size Table (204) is given a zero value and the record being too large will have a two byte header stored in the actual record data for specifying its size. In this way, records/font data being larger than 32 bytes may be handled properly while maintaining each entry in the Size Table (204) to only 5 bits/a minimum of bits thereby reducing the memory needed for the index.

In order to determine the relevant bit position in the Size Table (204) for the entry number associated with KEY the variable ENTRY is multiplied by 5 (the individual size of the entries in the Size Table (204)).

Also shown is another table designated Offset Table (205) comprising offset entries/values (205'. The offset values (205') each specify an offset for a record. Preferably, only one offset/entry (205'), called a Base offset (205'), is stored for each group of, e.g. 16, entries instead of storing an offset for every stored record. That is only one Base offset (205') is stored for every *i'th* records/first and second key combinations, e.g. one Base offset (205') is stored for every 16^{th} stored record. In this way, memory is saved since only an i'th amount of space is needed.

The actual offset for the given key is determined firstly by determining the closest lower or equal Base Offset (205') in the Offset Table (205) has to be determined. This is preferably done by dividing the resulting/final entry number for the combination of the first and second key by a number equal to the number of offsets not in the Offset Table + 1, i.e. dividing by e.g. 16 if only one Base offset (205') is stored for every e.g. 16^{th} stored record.

Secondly by, after a Base Offset value is determined by addressing the Offset Table (205) at the determined closest lower or equal Base Offset (205'), accumulating the sizes of all keys that are lower than the first and second key and belonging to the same Base Offset, i.e. from the Base (205') and up to and not including the first and second key, and adding the accumulated size to the offset value stored at the Base (205') in the Offset Table (205) giving the total offset for the first and second key. This total offset may now be used to locate the appropriate record/data information being indexed after the first and second key.

The relevant sizes of the records are determined by addressing the Size Table (204), which contains the size of every stored record (206).

The time it takes to retrieve an indexed record using the structure shown in Figure 3 is dependent on the implementation of the Size Table (204). Apart from that the number of additions are lower than in the binary search case explain in connection with Figure 1. If timing is crucial the Size Table (204) may be replaced by an array of 8 bit entries for each key. It is also possible to reduce the interval between the entries in the Offset Table (205) and the Entry Table (203), thereby reducing the number of additions. Generally, the interval between entries in the Offset Table (205) and the Entry Table (203) may be used to fine-tune space/speed optimisation. These further improvements are also applicable to the structure shown in Figure 2a and the method illustrated in Figure 5a.

To illustrate the memory saving obtained by using an index according to the present invention the following is given using the exemplary Asian Unicode font file as a reference.

The sizes for the exemplary Asian Unicode font (approximately 11000 characters):

| | |
|---|---|
| Page Table | 256×32 bits = 1024 bytes |
| Check Tables | 104×256 bits = 3328 bytes |
| Entry Table | 256×16 bits = 512 bytes |
| Size Table | 11000×5 bits = 6875 bytes |
| Offset Table | 11000/16×32 bits = 2750 bytes |

giving a total of 14489 bytes.

In comparison to the original structure (shown in Figure 1), this is a reduction of approximately 50 Kbytes or 80%.

Figure 4 shows a single character of the Asian font file/resource. Shown is an example of a Chinese character used for explaining the present invention used with respect to storing records comprising character information and indexing the records according to Unicode keys for the characters.

The character is represented by binary values ("0" for 'white' and "1" for 'black') in an array data structure (401), which may be stored and indexed advantageously according to the present invention.

This particular character has the 16-bit Unicode [8BFE] in hexadecimal notation, 1000 1011 1111 1110 in binary notation, and [139; 254] in decimal notation, which is used to uniquely determine/identify that particular character.

The Unicode is used as a key after which the corresponding character data/information may be indexed, e.g. in the form of a data record, according to the present invention. More specifically, the key comprises a first part/key being the 8 upper bits [8B] and a second part/key being the 8 lower bits [FE].

The first key is used to access a Page Table at index 139 ('Page Table[8B]' or 'Page Table[8BFE>>8]' where » is a binary shift operator corresponding to division by 2; so X>>8 means X divided by 2^8 (256)) where a stored pointer may be used to access a relevant Check Table among a number of Check Tables (256 for a 16-bit key). The relevant Check Table are addressed by using the second key/second part of the key ('Check Table[FE]' or 'Check Table [8BFE&'FF']) in order to determine firstly if a record exists or not, which is done by checking the value of the 'Check Table[FE]' like described earlier, and secondly the number (*N*_{*1*}) of second keys in the relevant being lesser than [FE]. For this particular example, there are 143 existing and checked characters in the relevant Check Table with lower second keys than [8BFE].

A relevant intermediate entry number for the relevant Check table are determined by addressing an Entry Table using the first key ('Entry Table[8B]' or 'Entry Table[8BFE>>8]') giving the intermediate entry number 7870 for this Check table. The number (*N*_{*1*}) is added to the obtained relevant intermediate entry number in order to determine the entry number for the key [8BFE] giving the entry number 8013 (=7870 + 143) for the character [8BFE].

The offset index for the nearest lower or equal base offset is 500 (8013/16, since there are 16 entries for each base entry/segment in the Offset Table). The offset value found in this field (500) is 143214. Adding the sizes of the characters with lower key(s) than [8BFE] belonging to the base offset index 500 gives the final offset of 143447, which is the position of the actual image data in the character data array/records.

The sizes of the characters with lower key(s) than [8BFE] is found using a Size Table like described earlier.

So in this way, character data is located in the memory and may be located and e.g. retrieved for further use like being displayed etc.

Figure 5a shows a flowchart illustrating a preferred embodiment of the method according to the present invention.

The method is initiated at step (501) and uses a given key comprising a given first key part and a given second key part in order to obtain the relevant information stored in a record and being associated with the given key.

At step (501) a relevant Check Table is identified. Preferably the relevant Check Table is determined by using a first key or a first part of a key (referred to as first key in the following) as an index in a Page Table. The Page Table has a relevant pointer (pₓ) stored at an index equal to the first key.

At step (502) an intermediate entry number for the first key is obtained by addressing an Entry Table.

However preferably, a second key or a second part of a key (referred to as second key in the following) is first (or alternatively after) used as an index in the relevant Check Table in order to locate the appropriate entry for specifying whether a given record exists or not.

In a preferred embodiment, only Check Tables for relevant entries in the Page Table are stored. So if e.g. no records are indexed according to a first key then even though that key may exist in the Page Table no corresponding Check Table are stored, which reduces the amount of needed space even further.

The entry for first key in the Page Table may indicate that no Check Table for that particular key exists by containing a NIL pointer. In this way, retrieval for a non-existing record may be aborted very fast thereby saving execution time and memory by not necessarily storing a Check Table for each possible key.

After the check of whether the record exists or not, the Entry Table are first addressed at step (502) by using the first key in order to determine the intermediate entry number for the specific Check Table. Then the number of "1"s in the specific Check Table being located above the entry for the second key is counted, i.e. counting the number (*N*_{*1*}) of existing/checked lower (incrementing from 0 and downwards) second keys.

At step (503), the amount (*N*_{*1*}) is then added to the intermediate entry number for the specific Check Table in order to give the entry number for the relevant record thereby updating the Entry Number.

Alternatively, instead of counting the number of entries being above the entry defined by the second key in the relevant Check Table counting down may be used. If counting down is used then it is necessary to get the intermediate entry number for the next entry in the Entry Table and subtract the (downwards) counted number from the entry number for the index/entry in the Entry Table. Alternatively, either counting up or down in the relevant Check Table may be used dependent on what is closest/most suitable for a given implementation and/or application of an index.

Some modifications may be in order to ensure that the above alternatives function for every (special) case.

In this way, the first key locates the relevant Check Table via a pointer pₓ in the Page Table and locates the relevant intermediate entry number for that particular Check Table (202'). The second key is used to check if there exists a "1" for the second key in the relevant Check Table, thereby signifying that a record exists, and locates the relevant entry in the relevant Check Table. The resulting entry number, i.e. the entry number for the first and second key, is determined by adding the number of "1"s being above the relevant entry in the relevant Check Table to the intermediate entry number for the relevant Check Table.

Alternatively, *N*_{*1*} may be obtained before step (502).

After the resulting/final/updated entry number has been determined a base offset is obtained at step (504).

The updated entry number is multiplied by the size of an entry in a Size Table, comprising entries stating the size of each stored record, in order to determine the bit position for the updated entry number in the Size Table.

Then the closest lower Base offset e.g. stored in an Offset Table has to be determined. This is preferably done by dividing the updated entry number by the number of entries, e.g. 16, in a given segment, since only every other Base offset may be stored in the Offset Table.

A base offset value is determined by addressing the Offset Table at the determined closest lower Base Offset.

At step (505) a Final Offset is derived by accumulating the sizes of all keys that are lower than the first and second key and in the same segment, i.e. between the Base offset and the first and second key. This accumulated size is then added to the Base offset value giving the Final/Total Offset for the first and second key. This total offset may now be used to locate (and retrieve) the appropriate record/data information being indexed after the given first and second key.

The sizes of the keys are e.g. determined by addressing the Size Table (204).

Preferably, if any size of a record is larger than what may be indicated by an entry in the Size Table, e.g. a record equal to or larger than 32 bytes if the entries in the Size Table are 5 bits, the value for that entry in the Size Table is given a zero value and the record being too large will have a two byte header stored in the actual record data for specifying its size.

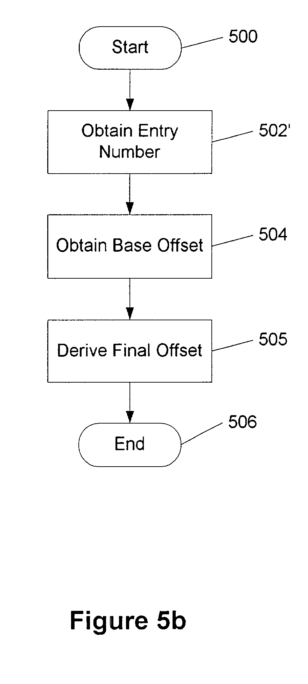

Figure 5b shows a flowchart of an alternative embodiment of the method according to the present invention. This flowchart corresponds to the flowchart in Figure 5a except that the step (501) in Figure 5a is not performed.

Instead an entry number is obtained at step (502') by using the key to address a Key Table/The Single-Check-Table, comprising a number of segments, and where each segment corresponds to a Check-Table as described in connection with Figure 2a and 5a.

For each segment of the Key table there is a matching element in the Entry Table used as the base/intermediate entry number for the segment.

Each entry of the Key Table is preferably only 1 bit and comprises a value/indication of "1" or "0", where "1" indicates that a record exists for a key addressing the given entry and "0" indicates that a record does not exists for a key addressing the given entry.

To check for the existence of a record, the single bit in the field/index corresponding to the first and second key parts is used.

After the check of whether the record exists or not, the Entry Table are first addressed by using the first key in order to determine the intermediate entry number for the specific segment of the Key Table.

Then the number of "1"s in the specific segment being located above the index for the key is counted, i.e. counting the number (*N*_{*1*}) of existing/checked lower (incrementing from the first entry) keys in that particular segment. The amount (*N*_{*1*}) is then added to the intermediate entry number for the specific Check Table in order to give the entry number for the relevant record.

That is, when the entry number is calculated, the Key Table/The Single-Check-Table is used segment-wise, where each segment contains e.g. 256 entries for a 16-bit key, and where each segment corresponds to a Check-Table as described in connection with Figures 2a and 5a. For each segment there is a matching element in the Entry Table used as the base/intermediate entry number for the segment, exactly as was described for one of the Check Tables in connection with Figures 2a and 5a.

The Key Table is addressed by the entire key and the Entry Table is still addressed by the first key part (e.g. the upper 8 bits of Unicode)

After the relevant entry number is obtained for a given key the record is retrieved by obtaining a Base Offset at step (504) and deriving a final/resulting offset at step (505) Tables, where step (504) and (505) corresponds to the steps described in connection with Figure 5a.

The method illustrated in Figure 5b does not minimise the space required for an index as much as the method in Figure 5a. However, it still minimises the required space compared to prior art techniques and additionally it may be simpler to implement, which might be preferred for some applications, since no use of pointers are necessary.

Figure 6 shows a preferred embodiment of the invention, which may contain the memory structure and/or use the method according to the present invention.

Shown is a mobile telephone (601) having display means (604), input means (605) like a keypad, touch screen/pad, etc., an antenna (602), a microphone (606), and a speaker (603). By including the data structure and/or using the method according to the present invention one or more font sets and/or other information being stored in records may be stored and retrieved in the mobile telephone (601) using an index using very little memory. As stated above the memory needed to index e.g. an Asian/Chinese Unicode font file containing approximately 11000 characters is only 20% of what an index like the one shown in Figure 1 would use. The reduction of memory is especially advantageous in portable devices where the physical space and power consumption often has to be minimised as much as possible.

## Claims

1. A method of locating indexed information, comprising a plurality of static data records of different lengths, using a given key, the method comprising the step of:
• using the given key to obtain an entry number,
**characterized in that** the method further comprises the steps of:
• selecting a base index stored in a first table on the basis of the entry number thereby obtaining a base offset, and
• adding sizes of all keys, equal to or larger than the base index and lower than the given key, to the base offset resulting in a final offset.

2. Method according to claim 1, **characterized in that** the key comprises a given first key part and a given second key part, and **in that** the step of using the given key to obtain an entry number comprises:
• using the given key to address a given entry in second table, comprising a number of segments each comprising a number of entries, in order to obtain a given indication to a specific segment,
• obtaining an intermediate entry number from a third table by using the given first key part,
• updating the intermediate entry number by adding the number of keys, stored in the specific segment of the second table, lower than the given key resulting in the entry number.

3. Method according to claim 1, **characterized in that** the key comprises a given first key part and a given second key part, and **in that** the step of using the given key to obtain an entry number comprises:
• using the given first key part to address a fourth table, comprising a number of entries each comprising an indication of a fifth table among a plurality of fifth tables, in order to obtain a given indication to a specific fifth table,
• obtaining an intermediate entry number from a third table by using the given first key part,
• updating the intermediate entry number by adding the number of second key parts, stored in the specific fifth table, lower than the given second key part resulting in the entry number.

4. Method according to claims 1 - 3, **characterized in that** the final offset is used to retrieve a record associated with the given key.

5. Method according to claims 2 - 4, **characterized in that** the specific fifth table or second table further is used in order to verify/check whether a given record exists for a given second key part or for a given key.

6. Method according to claims 2 - 5, **characterized in that** a single bit in each entry of the plurality of fifth tables or in each entry of the second table is stored and signifies whether a record exists for a given second key part or for a given key.

7. Method according to claims 1 - 6, **characterized in that** a sixth table comprises the size of all keys each associated with an existing record.

8. Method according to claim 7, **characterized in that** if any size of a record is larger than what may be indicated by an entry in the sixth table then the value for that entry in the sixth table is given a zero value and the record being too large will have a two byte header stored in the actual record data specifying the size of the record.

9. Method according to claims 1 - 8, **characterized in that** the data records each comprise a representation of a font character.

10. Method according to claims 1 - 9, **characterized in that** the given key is a Unicode for a font character being indexed according to the given key.

11. A data structure for locating indexed information, comprising a plurality of static data records (206) of different lengths, using a given key, where the data structure is adapted to obtain an entry number using the given key
**characterized in that** the data structure further comprises
• a first table (204) comprising a plurality of base indexes being accessible on the basis of the entry number thereby obtaining a base offset,
and **in that** the data structure further enables
• adding sizes of all keys equal or larger than the base index and lower than the given key resulting in a final offset.

12. Data structure according to claim 11, **characterized in that** the key comprises a given first key part and a given second key part, the data structure further comprising:
• a second table (210), comprising a number of segments each comprising a number of entries each comprising an indication of a specific segment among a plurality of segments and each being accessible by the key in order to, obtain an given indication to a specific segment,
• a third table (203) comprising a number of intermediate entry numbers being accessible by using the given first key part,
and **in that** the data structure further enables
• updating of the intermediate entry number by adding the number of keys, stored in the specific segment, lower than the given key, resulting in the entry number.

13. Data Structure according to claim 11, **characterized in that** the key comprises a given first key part and a given second key part, the data structure further comprising:
• a fourth table (201) comprising a number of entries each comprising an indication (pₓ) of a fifth table (202') among a plurality of fifth tables (202) and each being accessible by the given first key part in order to, obtain an given indication to a specific fifth table (202'),
• a plurality of fifth tables (202), and
• a third table (203) comprising a number of intermediate entry numbers being accessible by using the given first key part,
and **in that** the data structure further enables
• updating of the intermediate entry number by adding the number of second key parts, stored in the specific fifth table (202'), lower than the given second key part, resulting in the entry number.

14. Data structure according to claims 11 - 13, **characterized in that** the final offset is used to retrieve a record (206) associated with the given key.

15. Data structure according to claims 12 - 14, **characterized in that** the specific fifth table (202') or the second table (210) further is used in order to verify/check whether a given record (206) exists for a given second key part or for a given key.

16. Data structure according to claims 12 - 15, **characterized in that** a single bit in each entry of the plurality of fifth tables (202) or in each entry of the second table (210) is stored and signifies whether a record exists (206) for a given second key part or for a given key.

17. Data structure according to claims 11 - 16, **characterized in that** a sixth table (205) comprises the size of all keys each associated with an existing record (206).

18. Data structure according to claim 17, **characterized in that** if any size of a record is larger than what may be indicated by an entry in the sixth table (205) then the value for that entry in the sixth table (205) is given a zero value and the record (206) being too large will have a two byte header stored in the actual record data specifying the size of the record (206).

19. Data structure according to claims 11 - 18, **characterized in that** the data records each comprise a representation of a font character.

20. Data structure according to claims 11 - 19, **characterized in that** the given key is a Unicode for a font character being indexed according to the given key.

21. Apparatus for locating indexed information comprising a plurality of static data records of different lengths, the apparatus comprising a data structure according to claims 11 - 20.

22. Apparatus for locating indexed information comprising a plurality of static data records of different lengths, the apparatus using the method according to claims 1 - 10.

23. Apparatus according to claim 21 or 22, **characterized in that** the apparatus is a portable device.

24. Apparatus according to claims 21 - 23, **charact erized in that** the apparatus is a mobile telephone.

25. A computer-readable medium having stored thereon instructions for causing a processing unit to execute the method according to any one of claims 1 - 10.

26. A computer system comprising means adapted to execute a program, where the program, when executed, causes the computer system to perform the method according to claims 1 - 10.
